# DEMANDE DE BREVET EUROPEEN

(11) **EP 4 847 250 A2**
(43) Date de publication de la demande: **02.12.2026**
(21) Numéro de dépôt: 26210132.2
(22) Date de dépôt: 14.06.2022
(51) Int. Cl.: B33Y 70/00

(54) **PROCÉDÉ DE FABRICATION ADDITIVE, COMPOSITION DE POUDRE POLYMERE COMPORTANT UN ADDITIF DE DÉTECTION, ET OBJET OBTENU PAR LEDIT PROCÉDÉ**

(30) Priorité: 17.06.2021 FR 2106442
(62) Numéro(s) de document de la (des) demande(s) initiale(s) en application de l'article 76 CBE: 22743558.3 / 4 355 555
(71) Demandeur: Fabulous, 69120 Vaulx-en-Velin (FR)
(72) Inventeur: Coulet, Olivier, 69680 Chassieu (FR); FETEIRA ESCUDEIRO, Rita, 69002 Lyon (FR); Coulet, Arnault, 75009 Paris (FR)
(74) Mandataire: Mross, Stefan P.M.

(57) **Abrégé**

Composition de poudre pour procédé de fabrication additive par élévation locale de la température d'une poudre à base de polyamide par un rayonnement électromagnétique dans une enceinte chauffée, provoquant la fusion localisée d'une couche d'une épaisseur prédéterminée pour former, après refroidissement, une couche solide de polyamide caractérisée en ce que ladite poudre comporte, sur le poids total de la composition :
- entre 60 % et 99 % en poids de polyamide
- entre 0,05 % et 5 % en poids d'un additif de détection optique qui est un pigment, de préférence un pigment bleu et/ou entre 1 % et 40 % en poids d'un additif de détection magnétique, choisi parmi les oxydes comportant un métal de transition ;
- entre 0,1 % et 5 % en poids d'un agent d'écoulement ;
et en ce que la poudre présente :
- une distribution granulométrique D₅₀ comprise entre 35 µm et 55 µm ; et
- une distribution granulométrique D₁₀ supérieure à 15 µm et
- une distribution granulométrique D₉₀ inférieure à 100 µm.

## Description

### DOMAINE TECHNIQUE DE L'INVENTION

La présente invention concerne la fabrication de pièces en matériaux polymères et vise un procédé d'agglomération, couche par couche, notamment par fusion ou frittage, d'une poudre polymère comportant un additif de détection optique et/ou magnétique. La présente invention vise également une telle poudre polymère approvisionnée pour ce procédé et consommée lors du procédé. La présente invention vise enfin un objet obtenu par le procédé qui présente des propriétés particulièrement avantageuses dans le domaine de la sécurité des chaînes de production alimentaire.

### ÉTAT DE LA TECHNIQUE

Parmi la grande diversité de technologies de fabrication additive de pièces en matériaux polymères désormais disponibles, la présente demande s'inscrit dans le cadre des technologies impliquant une agglomération de poudre, couche par couche, en vue d'obtenir un objet tridimensionnel. Ainsi, dans le cadre du présent document, on désigne par les termes « fabrication additive » ou « impression 3D » ces seules méthodes. On désignera par « objet 3D » un objet obtenu par une telle méthode d'impression 3D.

Dans ce contexte, l'agglomération de poudres par fusion, coalescence, et/ou « frittage », est provoquée par un rayonnement permettant de faire fondre le matériau à agglomérer. Par exemple, le frittage sélectif par laser (SLS, abrévié de l'anglais « Selective Laser Sintering ») consiste à densifier localement un matériau présenté sous forme de poudre, en le faisant fondre sous l'action d'un laser. Toute autre source de rayonnement électromagnétique permettant de faire fondre la poudre peut également être mise en oeuvre, par exemple un rayonnement infrarouge, visible ou UV. D'autres méthodes notables de fabrication additive par fusion sur lit de poudre Incluent en particulier le frittage laser , la Fusion Multi Jet, le frittage par rayonnement infrarouge et le frittage à haute vitesse.

L'utilisation d'objets 3D en thermoplastiques est avantageuse dans les chaînes de production Industrielle, notamment car de tels objets peuvent être produits en petite série pour des usages spécifiques ou parce qu'ils présentent des caractéristiques structurelles spécifiques. Toutefois, les objets 3D en thermoplastiques sont difficiles à détecter par les moyens de détection des corps étrangers usuellement mis en œuvre dans le cadre du contrôle qualité en ligne, notamment dans l'industrie alimentaire. De sorte que si un objet 3D en thermoplastiques se casse, des fragments peuvent se retrouver dans le produit et représenter un risque pour la sécurité alimentaire.

Les procédés de fabrication additive connus de l'art antérieur et les poudres qu'ils utilisent ne permettent de produire des objets 3D présente à la fois des propriétés mécaniques satisfaisante pour une utilisation dans l'industrie et une détectabilité forte par les moyens de détection de corps étrangers, par exemple par détection magnétique ou par détection d'une couleur inhabituelle.

### DESCRIPTION DÉTAILLÉE DE L'INVENTION

La présente invention vise à remédier à tout ou partie de ces inconvénients.

À cet effet, selon un premier aspect, la présente invention vise un procédé de fabrication d'un objet tridimensionnel, comportant une élévation locale de la température d'une poudre à base de polyamide par un rayonnement électromagnétique dans une enceinte chauffée, provoquant la fusion localisée d'une couche d'une épaisseur prédéterminée pour former, après refroidissement, une couche solide de polyamide, ledit procédé étant caractérisée en ce que ladite poudre comporte, sur le poids total de la composition :
- entre 60 % et 99 % en poids de polyamide ;
- entre 1 % et 40 % en poids d'un additif de détection optique et/ou magnétique sélectionné dans le groupe formé par : les pigments comprenant une structure spinelle qui renferme un cation d'un métal de transition, les sulfures d'un métal de transition ;
- entre 0 % et 5 %, et de préférence entre 0,1 % et 4,5 %, en poids d'un agent d'écoulement ;
et en ce que la poudre présente :
- une distribution granulométrique D₅₀ comprise entre 35 µm et 55 µm ; et
- une distribution granulométrique D₁₀ supérieure à 15 µm et
- une distribution granulométrique D₉₀ inférieure à 100 µm.

Dans des modes de réalisation, la poudre présente :
- une distribution granulométrique D₅₀ comprise entre 35 µm et 55 µm,
- une distribution granulométrique D₁₀ comprise entre 15 µm et 25 µm et
- une distribution granulométrique D₉₀ comprise entre 80 µm et 100 µm.

Dans des modes de réalisation, la distribution granulométrique D₁₀ est supérieure à 10µm, préférentiellement supérieure à 15 µm, préférentiellement supérieure à 17 µm, préférentiellement supérieure à 20 µm.

Dans des modes de réalisation, la distribution granulométrique D₅₀ est Inférieure à 110 µm, préférentiellement inférieure à 100 µm, préférentiellement inférieure à 95 µm, préférentiellement inférieure à 93 µm, préférentiellement inférieure à 90 µm. Dans des modes de réalisation, la distribution granulométrique D₅₀ est inférieure à 80µm.

Dans des modes de réalisation, une fraction massique comprise entre 30 % et 70 % de ladite poudre est de la poudre polyamide fraîche, et une fraction massique comprise entre 70 % et 30 % de ladite poudre est une poudre polyamide récupérée dans ladite enceinte chauffée à l'issue d'une fabrication précédente, et
ladite poudre polyamide fraîche présente un indice de viscosité interne mesuré selon ISO 307:2019 compris entre 0,9 décilitres par gramme et 1,4 décilitres par gramme, à 25 °C.

Dans des modes de réalisation, le rayonnement électromagnétique provoquant la fusion localisée d'une couche est un rayonnement laser d'une densité énergétique supérieure ou égale à 25 mJ/mm². La méthode utilisée dans ce cas est préférentiellement la méthode de frittage sélectif par laser, plus souvent appelée SLS (abrévié de l'anglais « Selective Laser Sintering »).

Selon un deuxième aspect, l'invention vise une composition de poudre pour procédé de fabrication additive caractérisée en ce qu'elle comporte, sur le poids total de la composition :
- entre 60 % et 99 % en poids de polyamide ;
- entre 1 % et 40 % en poids d'un additif de détection, de préférence un additif de détection optique et/ou un additif de détection magnétique, sélectionné dans le groupe formé par : les pigments comprenant une structure spinelle qui renferme un cation d'un métal de transition, les oxydes d'un métal de transition, les sulfures d'un métal de transition ;
- entre 0 % et 5 %, et de préférence entre 0,1 % et 4,5 %, en poids d'un agent d'écoulement ;
et en ce que la poudre présente :
- une distribution granulométrique D₅₀ comprise entre 35 µm et 55 µm ; et
- une distribution granulométrique D₁₀ supérieure à 15 µm et
- une distribution granulométrique D₉₀ inférieure à 100 µm.

Dans des modes de réalisation, la composition de poudre de l'invention est obtenue par mélange à sec d'une poudre de polyamide naturelle avec une poudre de polyamide comportant un additif de détection.

Dans des modes de réalisation la composition de poudre objet de l'invention comporte :
- entre 0,05 % et 5% en poids d'un additif de détection optique choisi parmi les pigments comprenant une structure spinelle qui renferme un cation d'un métal de transition et
- entre 1 % et 35 % en poids d'un additif de détection magnétique parmi les oxydes des métaux de transition.

Alternativement, l'additif de détection optique ou magnétique est choisi parmi les sulfures d'un métal de transition.

Dans des modes de réalisation la composition de poudre objet de l'invention présente un indice de viscosité interne mesurée selon ISO 307:2019 compris entre 0,9 décilitres par gramme et 1,4 décilitres par gramme.

Dans des modes de réalisation la composition de poudre objet de l'invention présente une valeur ΔT= (Tₘ-T_{c})ₒₙₛₑₜ, comprise entre 30°C et 50°C.

Dans des modes de réalisation la composition de poudre objet de l'invention comporte un additif de détection optique et ledit additif de détection optique comporte du bleu de cobalt.

Selon un troisième aspect, l'invention vise un objet tridimensionnel obtenu par fabrication additive à partir d'une composition objet de l'invention.

Dans des modes de réalisation, l'objet tridimensionnel est coloré en bleu dans la masse par un additif de détection optique. Préférentiellement, l'additif de détection optique permet une détection optique dans une gamme de longueur d'onde comprise entre 0,5 µm et 12 µm.

Dans des modes de réalisation, l'objet tridimensionnel présente un module d'élasticité supérieur ou égal à 1700 MPa, une résistance à la traction supérieure ou égale à 30 MPa, un allongement à la rupture supérieur ou égal à 20 % selon une première orientation et supérieure ou égale à 35 % sur une deuxième orientation perpendiculaire à la première.

### BRÈVE DESCRIPTION DES FIGURES

D'autres avantages, buts et caractéristiques particulières de l'invention ressortiront de la description non limitative qui suit d'au moins un mode de réalisation particulier du procédé de fabrication additive, de la composition de poudre pour ledit procédé et d'un objet tridimensionnel obtenu par ledit procédé, objets de la présente invention, en regard des dessins annexés, dans lesquels :
[Fig 1] représente des courbes de densité de distribution granulométrique en fonction de la taille des particules de deux compositions de poudre selon l'invention et d'une poudre de polyamide 11 naturelle,
[Fig 2] représente des courbes de distribution cumulative en fonction de la circularité pour deux compositions de poudre selon l'invention et une poudre de polyamide 11 naturelle,
[Fig 3] représente une vue capturée au microscope électronique à balayage d'une composition de poudre selon l'invention,
[Fig 4] représente une vue obtenue par tomographie par rayons X d'une coupe d'un d'objet 3D obtenu à l'issu du procédé de fabrication additive à partir de la composition de poudre illustrée en figure 3,
[Fig 5] représente, schématiquement, une coupe d'un objet 3D obtenu par frittage de la composition de poudre illustrée en figure 3,
[Fig 6] représente une vue capturée au microscope électronique à balayage d'une composition de poudre pour fabrication additive,
[Fig 7] représente une vue obtenue par tomographie par rayons X d'une coupe d'un objet 3D obtenus à l'issu du procédé de frittage de la composition de poudre illustrée en figure 6,
[Fig 8] représente, schématiquement, une coupe d'un objet 3D obtenu par frittage de la composition de poudre illustrée en figure 6,
[Fig 9] représente une calorimétrie différentielle à balayage DSC d'une composition particulière de poudre selon l'invention,
[Fig 10] représente un graphique de la force en MPa en fonction de l'allongement selon une orientation xy, exprimé en %, obtenu à l'issu d'un test d'allongement sur un objet 3D obtenu par frittage d'une composition de poudre A, selon un mode de réalisation particulier de l'invention,
[Fig 11] représente un graphique de la force en MPa en fonction de l'allongement selon une orientation xz, exprimé en %, obtenu à l'issu d'un test d'allongement sur un objet 3D obtenu par frittage d'une composition de poudre A, selon un mode de réalisation particulier de l'invention et
[Fig 12] représente un graphique qui montre la distribution granulométrique volumique en fonction de la taille des particules d'une composition de poudre selon l'invention.

### DESCRIPTION DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

Les valeurs de l'indice de viscosité interne du polyamide indiquées dans le présent document se réfèrent à la norme ISO 307:2019 et à une température de 25 °C.

La composition de poudre pour procédé de fabrication additive par frittage selon l'invention comporte, sur le poids total de la composition :
- entre 60 % et 99 % en poids de polyamide,
- entre 1 % et 40 % en poids d'un additif de détection, qui peut être un additif de détection optique et/ou un additif de détection magnétique, et qui est de préférence sélectionné dans le groupe formé par : les pigments comprenant une structure spinelle qui renferme un cation d'un métal de transition, les oxydes d'un métal de transition, les sulfures d'un métal de transition ;
- entre 0 % et 5 % et de préférence entre 0,1 % et 4,5 % en poids d'un agent d'écoulement :
et en ce que la poudre présente :
- une distribution granulométrique D₅₀ comprise entre 35 µm et 55 µm ; et
- une distribution granulométrique D₁₀ supérieure à 15 µm et
- une distribution granulométrique D₉₀ Inférieure à 100 µm.

La poudre est dite « à base de polyamide » car elle comprend majoritairement du polyamide.

Les caractéristiques de la composition de poudre pour procédé de fabrication additive par frittage, ci-après « poudre de frittage », et de ses composants sont détaillées ci-après.

La forme des grains de la poudre de frittage est préférentiellement sphérique.

Selon l'invention, ledit additif de détection peut être sélectionné de manière à permettre une détection magnétique ou une détection optique, ou on peut utiliser deux additifs, à savoir un premier additif permettant la détection magnétique et un deuxième additif permettant la détection optique, ou encore on utilise un additif permettant à la fois une détection optique et une détection magnétique.

### Choix du polyamide ou dumélance de polyamides

Le polyamide peut être choisi parmi tout polyamide disponible, ou mélange de polyamides, permettant d'obtenir les caractéristiques granulométriques de la composition de l'invention.

De préférence le polyamide est choisi parmi les polyamides comportant un des monomères suivants : le PA6, le PA10, le PA11, le PA12 et leurs mélanges.

En particulier, le PA11 pourra être utilisé pour ses caractéristiques avantageuses et son origine biosourcée. On appelle « biosourcé » produit ou entièrement ou partiellement fabriqué à partir de matières d'origine biologique.

### Caractéristiaues de la poudre de frittage et température de travail (T₂)

Préférentiellement, la poudre de frittage présente une fenêtre de température de travail comprise entre 160 °C et 210 °C. La fenêtre de température de travail est l'intervalle de température délimité par la température initiale extrapolée du pic de fusion (T_{ei,m} ou T_{m,onset} en °C) et la température finale extrapolée du pic de cristallisation (T_{ef,c} ou T_{c,onset} en °C). La différence entre ces deux températures est appelée ΔT, elle exprime comme suit ΔT= T_{ei,m}-T_{ef,c} ou ΔT= (Tₘ-T_{c})ₒₙₛₑₜ.

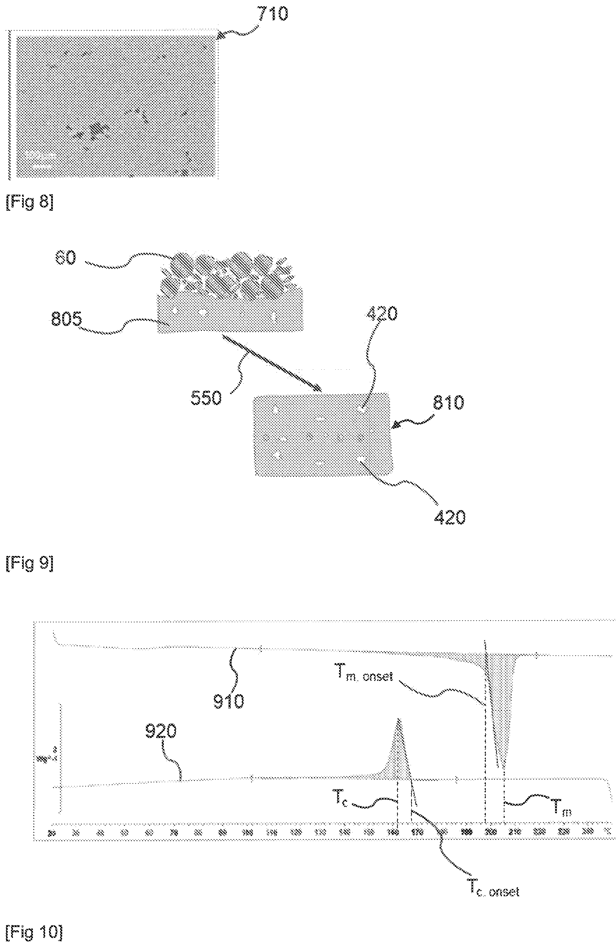

La température initiale extrapolée du pic de fusion T_{m,onset} et la température finale extrapolée du pic de cristallisation T_{c,onset} seront mieux comprises à la lecture de l'article Polymers Applicable for Laser Sintering (LS), publié par Schmid M. & Wegener K en 2016 (Additive Manufacturing: Procedia Engineering, 149, 457-464), notamment en regard de la figure 9.

Préférentiellement, ΔT= (Tₘ-T_{c})ₒₙₛₑₜ est comprise entre 30 °C et 50 °C. Ce ΔT est avantageux car il permet de définir la température de travail T₂. Plus préférentiellement encore, ΔT**=** (Tₘ-T_{c})ₒₙₛₑₜ est comprise entre 30 °C et 35 °C.

Dans le cas d'une ΔT inférieur à 30 °C le polymère risque de surréagir au changement d'état par l'apport d'énergie.

Pour un ΔT supérieur à 50 °C le risque est de ne pas pouvoir définir la température de travail T₂ stable, et par conséquent d'obtenir une agglomération générale du lit de poudre et des problèmes de recouvrement.

De même, il est nécessaire d'adapter l'apport en énergie en fonction de la température de travail T₂ choisit dans cette plage ΔT= (Tₘ -T_{c})ₒₙₛₑₜ. Un apport d'énergie excessif aurait pour conséquence néfaste la déformation de l'objet imprimé en 3D.

### Additif de détection

Selon une caractéristique essentielle de l'invention, la composition de poudre de comporte un additif de détection. Cet additif est avantageusement un composé inorganique insoluble dans l'eau et non toxique, de préférence de type spinelle. La composition de poudre de l'invention comporte, sur le poids total de la composition, entre 1 % et 40 % en poids d'un additif de détection.

L'additif de détection peut être un additif de détection optique. Plus particulièrement, la composition de poudre de l'invention peut comporter, par rapport au poids total de la composition, entre 0,05 % et 5% en poids d'un additif de détection optique, par exemple entre 0,05 % et 0,5%. Ce dernier est avantageusement sélectionné parmi les pigments comprenant une structure spinelle qui renferme un cation d'un métal de transition. Ce type de pigment présente l'avantage de ne pas être toxique. En particulier, le cation du métal de transition reste piégé dans la structure spinelle et ne peut pas être solubilisé dans les conditions normales de contact avec des aliments et boissons, ni en cas d'ingestion accidentelle par le transit intestinal. Les spinelles ont une bonne stabilité thermique sous le faisceau laser mis en œuvre dans la technique de procédé de frittage par laser SLS. La mise en œuvre de ces pigments est donc particulièrement préférable pour les compositions de poudre destinées à cet usage.

Selon un mode de réalisation particulier, le pigment est un pigment bleu, de préférence l'aluminate de cobalt (N° CAS : 1345-16-0), qui est disponible sous la dénomination commerciale PB 28. Préférentiellement, l'additif de détection optique utilisé permet une détection optique, le cas échéant par infrarouge. Par exemple, l'additif de détection optique utilisé permet une détection optique dans une gamme de longueur d'onde comprise entre 0,5 µm à 12 µm.

Selon d'autres modes de réalisation, le pigment comporte une structure olivine ou une structure rutile.

On précise que l'additif de détection optique est présent de manière sensiblement homogène dans la composition de poudre, de sorte que les pièces obtenues par fabrication additive à partir de cette poudre sont colorées dans la masse.

L'additif de détection peut être un additif de détection magnétique. Plus particulièrement, la composition de poudre de l'invention peut comporter, par rapport au poids total de la composition, entre 1 % et 40 % en poids d'un additif de détection magnétique.

L'additif de détection magnétique est préférentiellement choisi parmi les oxydes comportant un métal de transition. Par exemple, l'additif de détection magnétique est un oxyde de fer, tel que la magnétite naturelle ou synthétique (Fe₃O₄). Cet oxyde de type spinelle est insoluble dans l'eau et n'est pas toxique. De plus, il n'est pas susceptible de former des sels métalliques susceptibles d'être libérés par les pièces obtenues par fabrication additive à partir de cette poudre. La magnétite naturelle sera préférée à la magnétite de synthèse.

Que ce soit en tant qu'additif de détection optique ou en tant qu'additif de détection magnétique, on peut également utiliser un oxyde d'un métal de transition qui n'est pas une spinelle, ou bien un sulfure d'un métal de transition. Les additifs de détection magnétiques doivent bien évidemment être sélectionnés pour présenter des propriétés magnétiques particulières, susceptibles d'être aisément détectées.

Dans un mode de réalisation préférentiel, la composition de poudre de l'invention comporte à la fois entre 0,05 % et 5 % en poids d'un additif de détection optique choisi parmi les pigments comprenant et entre 1 % et 40 % en poids d'un additif de détection magnétique parmi les oxydes des métaux de transition.

### Choix de l'agent d'écoulement

La composition de l'invention comprend en outre un agent d'écoulement en quantité suffisante pour que la composition s'écoule librement, reste fluide et forme une couche uniforme, homogène et plane lors du procédé génératif de couche en lit de poudre PBF (Powder Bed Fusion) par exemple dit de frittage couche par couche de polymères SLS, LS.

La composition de l'invention comporte, sur le poids total de la composition, entre 0 % et 5 % en poids d'un agent d'écoulement. On préfère une teneur entre 0,1 % et 4,5 % en poids.

L'agent d'écoulement est choisi parmi ceux couramment utilisés dans le domaine du frittage de poudres polymères, par exemple parmi : les silices, les silices précipitées, les fumées de silice, les silices hydratées, les silices vitreuses, les silices pyrogénées, les phosphates vitreux, les oxydes vitreux.

De préférence l'agent d'écoulement présente une faible surface de contact.

### Fabrication d'une composition de poudre

Selon un mode de réalisation particulier, la composition de poudre conforme à l'invention est obtenue selon une méthode de fabrication qui comporte une première étape de mélange d'une poudre de polyamide dite « naturelle » avec un agent d'écoulement et au moins une étape parmi les suivantes :
- une étape de mélange de la composition obtenue précédemment avec une composition de poudre de polyamide comportant un additif de détection optique ;
- une étape de mélange de la composition obtenue précédemment avec une composition comportant un additif de détection magnétique.

Dans des modes de réalisation particuliers, ces deux demières étapes de mélange avec une composition comportant un additif de détection sont mises en œuvre successivement, on note que leur ordre peut être inversé.

Une poudre de polyamide naturelle est une composition de poudre comportant entre 95 % et 100% de polyamide, préférentiellement au moins 99 % en poids de polyamide.

La composition de poudre de polyamide comportant un additif de détection optique peut être obtenue par réduction en poudre d'une masse liquide ou solide homogène comportant le polyamide et ledit additif optique ou par polycondensation en phase solide, séchage puis broyage sélectif.

La composition comportant un additif de détection magnétique peut soit être l'additif magnétique sous forme pure (c'est-à-dire comportant au moins 95 % d'additif de détection magnétique) soit être une composition comportant un polyamide homogénéisé par mélange à sec avec un additif de détection magnétique.

Les étapes de mélanges mentionnés ci-avant peuvent être réalisées par mélange à sec (connu sous le terme anglais « dry blend ») ou par un procédé de compoundage (connu sous le terme anglais « master batch »). Le compoundage nécessite une étape ultérieure de broyage sélectif de la masse obtenue et d'ajustement de la viscosité par polycondensation en phase solide et séchage; pour cette raison on préfère le mélange à sec.

La dispersion de l'agent d'écoulement nécessite d'appliquer une énergie de mélange importante pour obtenir une bonne homogénéisation. Cette énergie de mélange est susceptible d'endommager les additifs de détection. On opte donc préférentiellement pour un prémélange à sec de l'agent d'écoulement avec une poudre de polyamide naturelle lors de la première étape de mélange, préalablement à au moins une étape de mélange avec une composition comportant un additif de détection, de moindre intensité que la première.

Dans des modes de réalisation, les étapes de mélange sont réalisées par cryo-broyage, cette méthode bien connue de l'homme du métier n'est pas décrite en détail ici.

Dans ces autres modes de réalisation les modalités d'obtention d'un mélange à sec de poudre homogène et dispersé de tous les composants sont adaptées en fonction des distributions initiales et de la distribution cible finale soit :
- une distribution granulométrique D₅₀ comprise entre 35 µm et 55 µm,
- une distribution granulométrique D₁₀ comprise entre 15 µm et 25 µm et
- une distribution granulométrique D₉₀ comprise entre 80 µm et 100 µm.

Selon un mode de réalisation particulier la distribution granulométrique cible finale de la poudre présente :
- une distribution granulométrique D₅₀ comprise entre 35 µm et 55 µm, et
- une distribution granulométrique D₁₀ supérieure à 20 µm et
- une distribution granulométrique D₉₀ inférieure à 80 µm.

### Distribution granulométrique de la composition de poudre

La distribution granulométrique D₁₀ de la composition de poudre est supérieure à 10µm, préférentiellement supérieure à 15 µm, préférentiellement supérieure à 17 µm, préférentiellement supérieure à 20 µm.

Une telle distribution granulométrique D₁₀ de la composition de poudre est avantageuse pour éviter la présence en trop grande quantité de particules fines ou poussières susceptibles de se volatiliser dans l'air et de présenter un risque pour la santé en cas d'inhalation et d'accumulation, d'irritation avec les yeux et de contact cutané de ces fines poussières.

La distribution granulométrique D₅₀ de la composition de poudre est comprise entre 35 µm et 55 µm. Préférentiellement la distribution granulométrique D₅₀ de la composition de poudre est comprise entre 38 µm et 45 µm, très préférentiellement elle est comprise entre 38 µm et 40 µm.

La demanderesse a constaté au cours de ses tests que ces intervalles de distribution granulométrique D₅₀ permettent d'obtenir les meilleures performances en termes de résolution finale, de définition géométrique des pièces obtenues ainsi qu'un meilleur recouvrement et une bonne fluidité de la poudre en température pour le procédé en lit de poudre PBF en utilisant des couches de 80 µm à 120 µm.

La distribution granulométrique D₉₀ de la composition de poudre est inférieure à 110 µm, préférentiellement inférieure à 100 µm, préférentiellement inférieure à 95 µm, préférentiellement inférieure à 93 µm préférentiellement inférieure à 90 µm. Dans des modes de réalisation, la distribution granulométrique D₅₀ est inférieure à 80µm.

Une telle distribution granulométrique D₉₀ est avantageuse pour une mise en œuvre de la poudre dans un procédé de fabrication additive dont l'épaisseur de couche est comprise entre 80 µm et 160 µm, par exemple pour une épaisseur de couche de 100 µm. Préférentiellement, la D₉₀ est choisie pour être inférieure à la taille de couche envisagée pour le procédé de fabrication additive.

Selon un mode de réalisation particulier la composition de poudre présente :
- une distribution granulométrique D₅₀ comprise entre 35 µm et 55 µm,
- une distribution granulométrique D₁₀ comprise entre 15 µm et 25 µm et
- une distribution granulométrique D₉₀ comprise entre 80 µm et 100 µm.

La demanderesse a constaté que de telles distributions granulométriques D₁₀, D₅₀, et D₉₀ sont avantageuses car, s'il avantageux bon d'avoir une distribution resserrée et de même morphologie pour une fabrication additive par frittage, une trop grande homogénéité de granulométrie de la composition de poudre donne lieu à des phénomènes de «caking» (c'est-à-dire d'agglomération de poudre) car des arrangements géométriques rendent la poudre plus agglomérée. Ainsi, ces distributions granulométriques D₁₀, D_{50,} et D₉₀ sont avantageuses car elles permettent de limiter les phénomènes d'agglomération de poudre et permet un dépoudrage des pièces obtenues par fabrication additive par frittage plus aisé.

Les valeurs de distribution granulométrique de la composition de poudre D₁₀, D₅₀ et D₉₀ mentionnées ci-dessus sont déterminées par la méthode d'analyse d'images statiques selon la norme ISO 13322-1:2014.

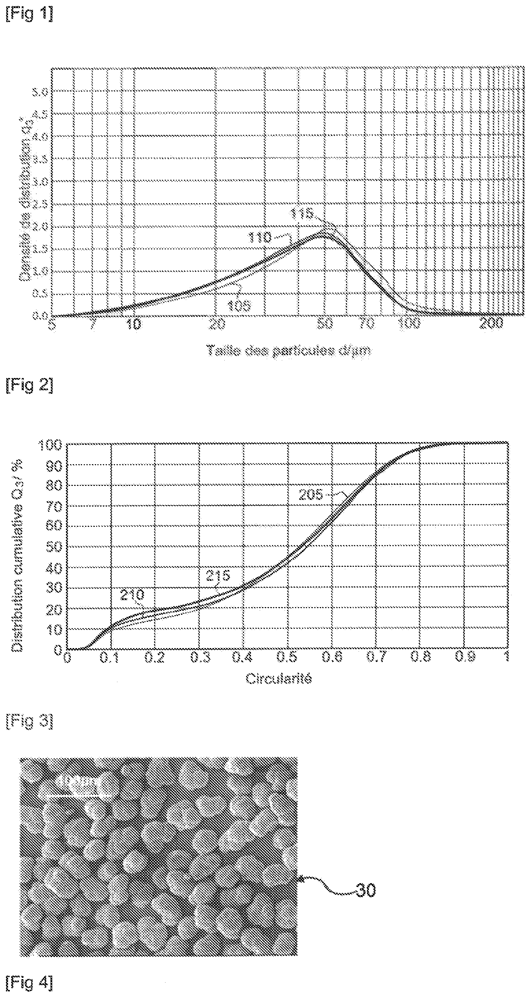

On observe en figure 1 les courbes de densité de distribution en fonction de la taille des particules (exprimée en micromètres, abrévié µm) pour trois poudres :
- une courbe 105 illustre la distribution granulométrique d'une poudre de PA11 dite naturelle, c'est-à-dire comportant au moins 99 % de PA11,
- une courbe 110 illustre la distribution granulométrique d'une composition A de poudre de selon l'invention, dans lequel le polyamide est un PA11 et qui comporte un additif de détection optique,
- une courbe 115 illustre la distribution granulométrique d'une composition B de poudre selon l'invention, dans lequel le polyamide est un polyamide 11 et qui comporte à la fois un additif de détection optique et un additif de détection magnétique.

On souligne que l'additif de détection optique et/ou l'additif de détection magnétique sont sélectionnés en vue d'obtenir une distribution granulométrique de la composition de poudre telle que détaillée ci-avant. Ainsi, on constate en figure 1 que la distribution granulométrique des compositions de poudre selon l'invention, avec additif de détection, restent proches de celle de la distribution granulométrique de la distribution de la poudre de PA11 naturelle, avec un pic de densité autour de 50 µm.

Avantageusement, la composition de poudre objet de l'invention comporte 90%, plus préférentiellement 99%, de grains dont la taille est comprise entre 10 µm et 120 µm, préférentiellement entre 20 µm et 90 µm, très préférentiellement entre 20 µm et 80 µm.

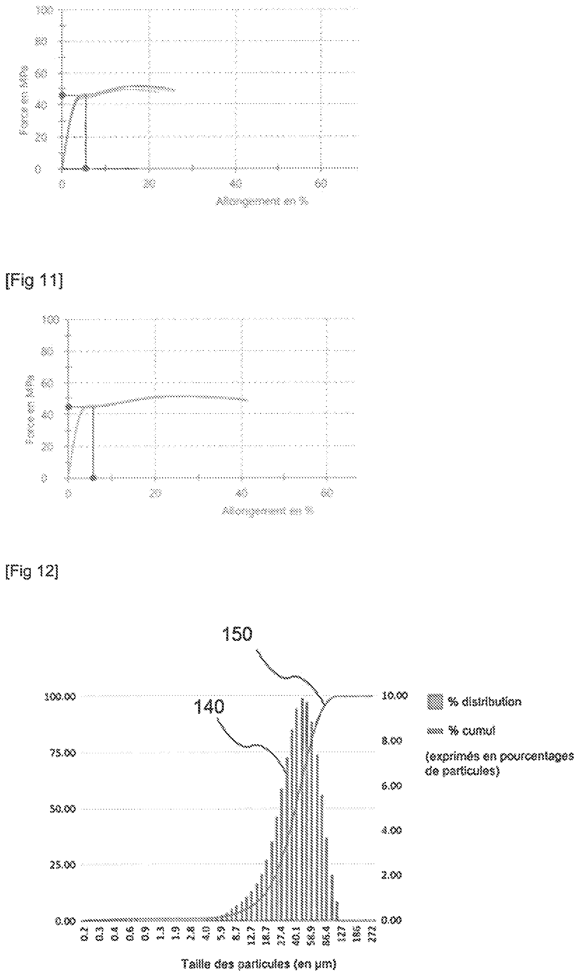

On observe en figure 12 un graphique qui montre la distribution granulométrique en fonction de la taille des particules de la composition A de poudre, dans lequel le polyamide est un PA11 et qui comporte un additif de détection optique. Les données illustrées en figure 12 sont issues de mesures granulométriques réalisées au moyen d'un granulomètre Mastersizer 3000 (marque déposée) de la société Malvem Panalytical. Le graphique présente des barres 140 d'un histogramme illustrant le pourcentage de particule dans la composition de poudre associé à chaque taille, exprimée en µm. Une courbe 150 illustre le pourcentage cumulé, de particules dont la taille est inférieure à un seuil, exprimé en µm. On constate sur le graphique de la figure 12 que la composition de poudre A comporte 90% de grains dont la taille est comprise entre 10 µm et 120 µm.

### Facteurs de forme de la composition de poudre

Les facteurs de forme sont des quantités sans dimension utilisées en analyse d'image et en microscopie qui décrivent numériquement la forme d'une particule, Indépendamment de sa taille.

L'indice de circularité *f*_{circ} est un facteur de forme qui se calcule comme suit : [Math 1] ${f}_{circ} = \frac{4 πA}{{P}^{2}}$ où P est le périmètre et A l'air d'une image d'un grain de poudre Ainsi une sphère qui aura un indice de circularité de 1 alors qu'un mica, de forme parallélépipède aura une circularité proche de 0.

Les règles et la nomenclature pour la description et la représentation quantitative de la forme et de la morphologie des particules spécifiés par la norme ISO 9276-6:2008 sont ici suivies.

Préférentiellement, la distribution cumulative f₁₀ de la composition de poudre selon l'invention est inférieure ou égale à 0,15. Très préférentiellement, la distribution cumulative f₁₀ de la composition de poudre est inférieure ou égale à 0,10. En d'autres termes, seul 10 % des grains de poudres présentent un indice de circularité inférieur ou égal à 0,15, préférentiellement inférieur ou égal à 0,10. En d'autres termes, 90 % des grains présentent un indice de circularité supérieur à 0,1, préférentiellement supérieur à 0,15.

La distribution cumulative f₅₀ de la composition de poudre est inférieure ou égale à 0,6. Préférentiellement, la distribution cumulative f₅₀ de la composition de poudre est inférieure ou égale à 0,55. En d'autres termes, seul 50 % des grains de poudres présentent un indice de circularité inférieur ou égal à 0,6, préférentiellement inférieur ou égal à 0,55. En d'autres termes, 50 % des grains de poudre présentent un indice de circularité supérieur à 0,55, préférentiellement supérieur à 0,6.

La distribution cumulative f₉₀ de la composition de poudre est inférieure ou égale à 0,8. Préférentiellement, la distribution cumulative f₉₀ de la composition de poudre est inférieure ou égale à 0,75. En d'autres termes, 90 % des grains de poudres présentent un indice de circularité inférieur ou égal à 0,8, préférentiellement inférieur ou égal à 0,75. En d'autres termes, 10 % des grains de poudre présentent un indice de circularité supérieur à 0,75, préférentiellement supérieur à 0,8.

On observe en figure 2 une représentation graphique de la distribution cumulative en ordonnée (exprimée en pourcentage), en fonction de la circularité en abscisse (indice sans unité). On observe en figure 2 :
- une courbe 205 illustrant la distribution cumulative d'une poudre de PA11 dite naturelle, c'est-à-dire comportant au moins 99 % en masse de PA11,
- une courbe 210 illustre la distribution cumulative d'une composition de poudre de selon l'invention, dans lequel le polyamide est un PA11 et qui comporte un additif de détection optique,
- une courbe 215 illustre la distribution cumulative d'une composition de poudre selon l'invention, dans lequel le polyamide est un polyamide 11 et qui comporte à la fois un additif de détection optique et un additif de détection magnétique.

L'additif de détection optique et/ou l'additif de détection magnétique sont préférentiellement sélectionnés en vue d'obtenir une distribution cumulative de la composition de poudre telle que détaillée ci-avant. On constate ainsi en figure 2 que la distribution cumulative des compositions de poudre selon l'invention, avec additif de détection, restent proches de celle de la distribution granulométrique de la distribution de la poudre de PA11 naturelle.

La morphologie des grains est importante pour la fluidité du mélange et pour la densification du lit de poudre lors des recouvrements successifs mais aussi pour la porosité résiduelle dans les pièces finales obtenues. Une bonne sphéricité de la poudre conjuguée avec une distribution très resserrée, c'est-à-dire une distribution cumulative du type de celle présentée plus haut, permettent d'obtenir une densification naturelle du lit de poudre par compaction et par des arrangements géométriques de la couche. Cette couche est ensuite exposée à une énergie laser pour fusion et coalescence favorisant la densification des pièces avec une faible porosité résiduelle. A l'inverse une poudre très hétérogène avec une distribution plus large aura tendance à s'organiser de façon plus chaotique et causera une moindre densification du lit de poudre, une partie des grains les plus gros pouvant ne pas être fondus.

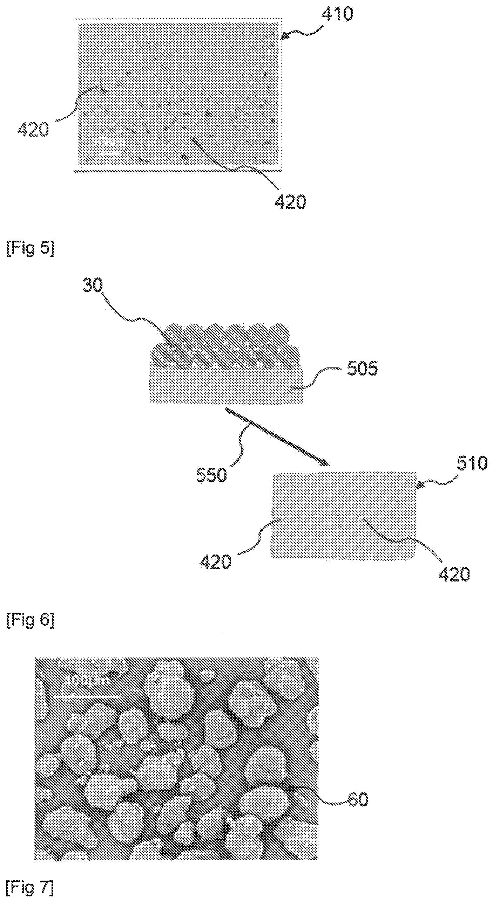

Pour illustrer ce propos, on présente en figure 3 et 6, deux vues capturées au microscope électronique à balayage de deux poudres, à un même grossissement. La figure 3 illustre une poudre qui présente une sphéricité comparable à la sphéricité d'une composition de poudre objet de l'invention, celle en figure 6 est présentée à titre de comparaison.

Ces poudres sont soumises à un procédé de frittage par laser SLS à une densité énergétique de 34 mJ/mm² (550 et 850). Des vues en tomographie par rayon X des coupes d'objets 3D obtenus à l'issu du procédé de frittage sont présentées en figures 4 et 7. Une représentation schématique des poudres 30 et 60 illustrées en figures 3 et 6 et de coupes d'objet 3D obtenus par frittage de ces poudres sont présentées en figures 5 et 8.

La poudre 30 illustrée en figure 3 est une poudre avec une bonne homogénéité de circularité avec une circularité des grains comprise entre 0,4 et 0,8, en moyenne égale à 0,65. La poudre 30, disposée sur une couche préalablement solidifiée 505 et soumise à un procédé 550 de frittage par laser SLS à une densité énergétique de 34 mJ/mm² permet d'obtenir une porosité résiduelle faible et distribuée, comme Illustré sur la coupe 410, en figure 4, obtenue par tomographie de l'objet 3D et sur la coupe 510, en figure 5. Les parties poreuses 420 qui apparaissent en noir sur la figure 4 sont illustrée sous forme de cavités blanches en figure 5. Ces parties poreuses sont moins nombreuses et mieux distribuées que celles constatées sur les coupes d'un objet 3D obtenus par frittage à partir d'une poudre de moindre homogénéité de circularité des grains, représentée en figures 7 et 8.

La poudre 60 Illustrée en figure 6 présente une homogénéité moindre que l'homogénéité de la poudre 30, avec une circularité des grains comprise entre 0,1 et 0,8, en moyenne égale à 0,55. La poudre 60, disposée sur une couche préalablement solidifiée 805 et soumise à un procédé 550 de frittage par laser SLS à une densité énergétique de 34 mJ/mm² abouti à l'obtention d'un objet 3D de moins bonne homogénéité et une porosité résiduelle plus grande, présenté en coupe 710 obtenue par tomographie, en figure 7, et en coupe schématique 810 en figure 8.

### Procédé de fabrication d'objet 3D

On rappelle que la présente demande s'inscrit dans le cadre des technologies impliquant un lit de poudre avec une agglomération couche par couche, en vue d'obtenir un objet tridimensionnel. Ainsi, dans le cadre du présent document, on désigne par les termes « fabrication additive » ou « impression 3D » ces seules méthodes. On désignera par « objet 3D » un objet obtenu par une telle méthode d'impression 3D.

La présente invention concerne plus particulièrement un procédé de fabrication additive par fusion sur lit de poudre (PBF, abrévié de l'anglais = Power Bed Fusion), couche par couche, à partir d'une poudre de polyamide dans une enceinte chauffée. Ces méthodes Incluent en particulier le frittage laser (LS = Laser Sintering), le frittage sélectif par laser (SLS = Selective Laser Sintering), la Fusion Multi Jet (MJF = Multi Jet Fusion), le frittage par rayonnement infrarouge (IRS = Infrared Sintering) et le frittage à haute vitesse (HSS, de l'anglais « High Speed Sintering »).

Quelle que soit la méthode de fabrication additive retenue, le procédé de l'invention a pour objet la fabrication d'objets 3D en polyamide comportant un additif de détection, à partir d'une composition de poudre de polyamide.

Le procédé selon l'invention se déroule dans une enceinte fermée et préchauffée à une température de consigne T₁. L'atmosphère à l'intérieur de l'enceinte est enrichie en azote (ou sous vide) et appauvrie en oxygène, afin de limiter l'oxydation de la poudre de polymère ; cette oxydation conduit progressivement à l'allongement des macromolécules constituant les particules de poudre polymère et représente le principal mécanisme de vieillissement desdites poudres. Cet allongement des macromolécules tend à augmenter la viscosité interne du polymère. La limitation de l'oxydation en température des poudres favorise le recyclage de la poudre non utilisée, ce qui contribue de manière significative à l'économie du procédé selon l'invention. De manière préférée, le taux d'oxygène est inférieur à 5 % volumiques, de préférence inférieur à 2 %, et encore plus préférentiellement inférieur à 1 %.

La température de maintien T₁ se situe avantageusement à environ 20 à 30 degrés autour de la température de cristallisation T_{c} du polymère. Selon un mode de réalisation avantageux, pour une poudre à base de polyamide PA11 et/ou PA12, la température de préchauffage T₁ se situe avantageusement entre environ 140 °C et environ 160 °C, de préférence entre environ 142 °C et environ 158 °C. Selon des modes de réalisation, la température de chauffage est égale à la température de maintien.

Plus généralement, la température de maintien T1 est préférentiellement comprise entre 150 et 185°C

Le procédé objet de l'invention comporte le dépôt d'une couche uniforme d'un lit de poudre de polyamide dans une enceinte préchauffée.

Immédiatement après le dépôt de chaque couche, la surface du lit de poudre est chauffée rapidement, typiquement par rayonnement Infrarouge, à une température T₂ qui est sélectionnée pour être environ inférieure de 8 % à 14 % à la Tₘ du polyamide (soit de 12 à 26 degrés inférieure à la température de fusion Tₘ de la poudre). Ce chauffage à une température T₂ permet de maintenir la poudre de polyamide à une température assez proche de sa température de fusion, sans toutefois atteindre cette température de fusion. On parle aussi de température de travail pour les systèmes PBF.

Selon un mode de réalisation avantageux, pour une poudre à base de polyamide PA11 et/ou PA6, la température T₂ se situe entre environ 183 °C et environ 204 °C.

Plus généralement, la température T₂ se situe entre 168 °C et 206 °C.

La fusion de la poudre est nécessaire pour obtenir une pièce compacte. Cette fusion doit être transitoire, rapide, localisée et contrôlée, de manière à éviter l'écoulement incontrôlé du polymère liquide ; pour cette raison elle doit être brève, c'est-à-dire que la fusion localisée doit être suivie promptement d'un refroidissement à température au-dessous du point de fusion Tₘ du polymère, vers une température T_{R} à laquelle le polymère peut recristalliser à partir de l'état fondu. Ladite température T_{R} peut se situer au voisinage de la température T2, elle est comprise entre T₁ et T₂.

Pour obtenir ladite fusion localisée et contrôlée d'une partie sélectionnée du lit de poudre, un rayonnement électromagnétique irradie des zones ciblées de la poudre de polyamide, permettant d'augmenter localement la température et d'agglomérer entre eux les grains de polyamide des zones ciblées. En fonction de la méthode retenue, le rayonnement électromagnétique est par exemple un rayonnement laser visible, infrarouge ou proche infrarouge. La température locale T_{L} de la zone en fusion est de préférence environ 8 % à 14 % supérieure à la Tₘ du polyamide (soit de 12 à 26 degrés supérieure à la température de fusion Tₘ de la poudre). Il se forme ainsi une phase liquide transitoire, mais si T_{L} est trop élevée, la viscosité du polymère fondu devient trop faible et il y a un risque de coulure.

A titre d'exemple particuliers, les températures T1 et T2 mise en œuvre au cours d'un procédé de frittage selon l'invention sont rassemblées en table 1 ci-dessous et mise en regard avec le point de fusion Tₘ et la température de cristallisation T_{c} des poudres de frittage A et B selon l'invention.

**[Table 1]**

| | Tₘ [°C] | Tc [°C] | T_{m,onset} [°C] | T_{c,onset} [°C] | ΔT [°C] | T₁ [°C] | T₂ [°C] |
|---|---|---|---|---|---|---|---|
| Poudre A : Additif optique | 202 | 163 | 198 | 168 | 30 | 155 | 186 |
| Poudre B : Additifs optique et magnétique | 202 | 164 | 199 | 168 | 31 | 155 | 184 |

On précise que :
- la poudre A est une composition de poudre de selon l'invention, dans lequel le polyamide est un PA11 et qui comporte un additif de détection optique et
- la poudre B est une composition de poudre selon l'invention, dans lequel le polyamide est un polyamide 11 et qui comporte à la fois un additif de détection optique et un additif de détection magnétique.

Pour la détermination de tout intervalle centré sur la température de fusion ou la température de cristallisation, on utilisera plus préférentiellement une température initiale extrapolée du pic de fusion (T_{m,onset}) et la température finale extrapolée du pic de cristallisation (T_{c,onset}), plutôt que les valeurs de température correspondants aux pics de fusion et de cristallisation, bien que les deux méthodes de détermination de ces valeurs de référence puissent être mis en œuvre sans dévier de l'invention.

Pour Illustrer ce propos on observe en figure 9 un DSC (calorimétrie différentielle à balayage, de l'anglais, Differential Scanning Calorimetry) d'une composition de poudre selon l'invention à base de PA11. Ce DSC montre une courbe 910 de montée en température initiale et une courbe 920 de refroidissement. Les températures de fusion et de cristallisation sont illustrées sur ce graphique, qu'elles soient déterminées par identification du pic correspondant (T_{c} et Tₘ) ou à la température initiale extrapolée pour le pic de fusion (T_{m,onset}) et à la température finale extrapolée pour le pic de cristallisation (T_{c,onset}).

Une fois que l'ensemble des zones ciblées d'une couche de lit de poudre ont été balayées par la source de rayonnement électromagnétique, un nouveau lit de poudre est déposé et aplani par-dessus le précédent. On rappelle que la poudre est autoportante, c'est-à-dire qu'elle repose sur la poudre précédemment déposée au cours du procédé. Ainsi de suite, un nouveau lit de poudre est déposé et la solidification d'une partie du nouveau de lit de poudre est engagée. La partie solidifiée de chaque lit de poudre correspond à une couche ou tranche de l'objet 3D obtenu en fin de procédé.

L'épaisseur de chaque tranche se situe typiquement entre environ 50 µm et environ 150 µm, de préférence entre environ 70 µm et environ 120 µm, et encore plus préférentiellement entre environ 80 µm et environ 110 µm. Le dépôt de chaque tranche est suivi d'un chauffage à la température T₂, comme décrit ci-dessus.

Selon un mode de réalisation du procédé, le frittage objet de l'invention est réalisé par SLS et le rayonnement électromagnétique provoquant la fusion localisée d'une couche est un rayonnement laser d'une densité énergétique supérieure ou égale à 25 mJ/mm² pour une température de travail T₂ comprise entre 180 °C et 199 °C, par exemple égale à 188°C. La densité énergétique supérieure ou égale à 25 mJ/mm² permet d'éviter la délamination de couches, c'est-à-dire la désolidarisation entre deux couches successives de polyamide solidifié.

La densité énergétique est calculée en utilisant la formule simplifiée de Morgan, qui s'exprime comme suit : [Math 2] $Ep = \frac{P ⋅ 2 ⋅ r ⋅ 2 ⋅ r}{π ⋅ {r}^{2} ⋅ v ⋅ S} = \frac{4 ⋅ P}{π ⋅ v ⋅ S}$
où P est la puissance du laser, exprimée en Watts
S est l'espacement entre scans (Écart de hachure), exprimée en millimètres (mm)
v est la vitesse du laser, exprimé en mm/seconde
r est le rayon du laser, exprimé en mm

A titre d'exemples, les conditions opératoires de procédés de frittage selon l'invention avec différents systèmes SLS sont rassemblées dans le tableau 2 ci-dessous. Ces conditions opératoires sont mises en œuvre sur une composition de poudre de frittage comportant du PA 11, à épaisseur de couche fixe de 100 µm, à température de travail T₂ environ égale à 188°C.

**[Table 2]**

| Densité énergétique [mJ/mm²] | Puissance du laser [W] | Vitesse du laser en balayage (scan speed) [mm/s] | Écart de hachure ou espacement entre scans [mm} |
|---|---|---|---|
| 27 | 70 | 12700 | 0,26 |
| 35 | 22 | 3200 | 0,25 |
| 29,3 | 14,5 | 3500 | 0,18 |
| >35 | 7 | 900 | 0,25 |

L'objet 3D en sortie de procédé de frittage est couvert de poudre non agglomérée, cette poudre est enlevée par des moyens mécaniques et/ou chimiques bien connus de l'homme du métier (jet d'air ou d'eau, brossage, sablage, traitement en phase solvant, bain ultrasonique, traitement avec une solution de HF, etc.) qui ne sont pas détaillés ici.

### Réutilisation de la composition de poudre de polyamide objet de l'invention

Au cours d'un procédé tel que celui décrit ci-dessus, une partie de la composition de poudre pour procédé de fabrication additive par lit de poudre PBF (Power Bed Fusion) selon l'invention introduite dans l'enceinte chauffante n'est pas solidifiée. Avantageusement, cette poudre est collectée et tamisée en vue de sa réutilisation en mélange avec une composition de poudre polyamide fraîche, c'est-à-dire avec une poudre qui n'a pas déjà été utilisée dans un procédé de frittage.

Préférentiellement, la composition de poudre selon l'invention comporte une fraction massique comprise entre 20 % et 70 % de composition de poudre polyamide fraîche, et une fraction massique comprise entre 80 % et 30 % de poudre polyamide récupérée à l'issue d'une fabrication précédente. De manière plus préférée, le lit de poudre déposé comporte une fraction massique comprise entre 25 % et 55 % de composition de poudre de polyamide fraîche, et une fraction massique comprise entre 75 % et 45 % de poudre polyamide récupérée à l'issue d'une fabrication précédente.

L'ajout de poudre fraîche à la poudre usée ajoute des grains de polyamide en bon état (non thermo-oxydé), qui ne sont pas déjà endommagés ou déformés par un précédent procédé de frittage induisant une thermo-oxydation, et ainsi maintient la viscosité interne du mélange dans une plage donnée en abaissant cette viscosité à chaque cycle au fur et à mesure de son évolution.

Préférentiellement, la poudre de polyamide fraîche utilisée présente un indice de viscosité interne mesuré selon ISO 307:2019 compris entre 0,9 décilitres par gramme et 1,4 décilitres par gramme. Un indice de viscosité interne inférieure à 1,4 décilitres par gramme, préférentiellement inférieure à 1,2 décilitre par gramme permet de conserver suffisamment basse la viscosité interne de la composition de poudre de polyamide, même quand cette composition est obtenue par mélange d'une poudre fraîche avec une poudre déjà cyclée utilisée par un procédé en lit de poudre PBF.

La méthode de détermination de l'indice de viscosité interne des plastiques et polyamides, selon la norme ISO 307:2019 repose sur la détermination de l'indice de viscosité de solutions diluées de polyamides dans certains solvants spécifiés dans la norme précitée.

Cette viscosité intervient dans la rhéologie des phénomènes de fusion et/ou de coalescence : les particules déposées doivent fondre et coalescer pour former une masse dense, non poreuse, mais sans fluer de manière incontrôlée. La viscosité interne influe sur les propriétés mécaniques de la pièce, son aspect et sa finition de surface du produit fini.

Pour une utilisation optimale de la composition de poudre il est conseillé de ne pas dépasser un nombre de cycle de recyclage d'une même poudre, c'est-à-dire de ne pas recycler à nouveau un mélange de poudre qui a subi un nombre élevé de cycles thermique dans un procédé de lit de poudre PBF. La collecte de la poudre cyclée et son tamisage doivent précéder le mélange avec de la poudre de polyamide fraîche afin d'écarter les agrégats de grains de poudre.

Le nombre de cycles possibles dépend du degré d'oxydation de la poudre recyclée, sachant que la viscosité interne augmente avec le degré d'oxydation. Les inventeurs constatent qu'en moyenne on peut réutiliser une même poudre dans 8 à 10 cycles de recyclage, mais cela dépend principalement de la durée d'exposition de la poudre à une température élevée et du taux d'oxygène dans l'enceinte, tout au long du cycle thermique subi (préchauffage, fabrication en température et refroidissement) soit durant toute la fabrication en PBF soit durant le refroidissement jusqu'à une température inférieure à 60 °C.

Le recyclage est favorisé par le fait que la poudre fraîche possède la viscosité Interne indiquée ci-dessus. En effet, pour fabriquer des pièces de bonne qualité par le procédé selon l'invention, on peut utiliser une poudre dont l'indice de viscosité interne se situe un peu en dehors de cette zone entre 0,9 décilitres par gramme et 1,4 décilitres par gramme, mais pour que la poudre fraîche puisse être recyclée dans le procédé PBF, dans des conditions économiques intéressantes et selon les conditions techniques indiquées ci-dessus (mélangé à de la poudre fraîche à raison de 30 % à 60 %), il est préférable de respecter, pour la poudre fraîche, un rafraîchissement continue à 50 % et le tamisage systématique de la poudre déjà cyclée.

A titre d'exemple, la composition selon l'invention est la poudre A (déjà décrite plus haut). La poudre A fraiche présente un indice de viscosité interne égale à 1,3 décilitres par gramme. Après mise en œuvre d'un procédé de frittage, une nouvelle composition de poudre selon l'invention est formée par mélange de moitié de poudre fraîche et de moitié recyclée. Après un à deux cycles, la composition de poudre présente un indice de viscosité interne égale de l'ordre de 1,7 décilitres par gramme. Après trois à six cycles, la composition de poudre présente un indice de viscosité interne de l'ordre de 2,05 décilitres par gramme.

**[Table 3]**

| | Évolution de l'indice de Viscosité interne (en décilitres par gramme à 25°C) | | |
|---|---|---|---|
| Poudre | Poudre fraîche Temps en t° = 0hrs | Poudre rafraîchie (1 à 2 cycles) Temps en t° >20hrs | Poudre rafraîchie (3 à 6 cycles) Temps en t° > 50hrs |
| Poudre A : Additif optique | 1,3 | 1,7 | 2,05 |

Au lieu du nombre de cycle, on peut prendre en considération le temps en température, c'est-à-dire le temps durant lequel est la composition de poudre est soumis à un échauffement dans l'enceinte chauffée. Cette approche peut être plus précise car les cycles de fabrication peuvent être plus ou moins longs. Les temps en température testés pour aboutir aux valeurs de l'indice de viscosité interne du tableau ci-dessus sont également indiqués. Ce temps en température est égal à 0 pour une poudre fraîche, il est supérieur à 20 heures pour une poudre ayant subi 1 à 2 cycles et supérieur à 50 heures pour une poudre ayant subi 3 à 6 cycles de recyclage.

### Détection magnétique des objets 3D obtenus

La présence d'un additif de détection optique ou magnétique dans la composition de poudre de l'invention permet la détection des objets 3D obtenus par frittage de cette poudre.

Dans le cas d'une détection magnétique, les objets 3D obtenus à partir d'une poudre comportant un additif de détection magnétique sont par exemple détectés par induction électromagnétique ou selon toute autre méthode de détection d'un objet magnétique. Ces méthodes bien connues de l'homme du métier ne sont pas décrites ici.

### Détection optique des objets 3D obtenus

Les objets 3D obtenus par fabrication additive d'une composition de poudre son colorés dans la masse, c'est-à-dire que le la matière constituant l'objet 3D est colorée et que l'objet ne présente pas seulement une coloration sur sa surface extérieure.

Cette caractéristique permet à un fragment d'objet 3D cassé de présenter sur toutes ses faces la couleur correspondante à l'additif de détection optique utilisé. Ainsi, un fragment d'un objet coloré dans la masse peut être détecté par des méthodes de détection optiques, lorsque l'objet est cassé.

Préférentiellement, l'objet 3D est coloré en bleu dans la masse. La couleur bleue étant peu courante parmi les produits alimentaires, elle ressort plus facilement que d'autres couleurs lorsqu'elle se trouve au milieu de produits alimentaires. En particulier, il peut être mise en œuvre une détection par infrarouge par irradiation dans une gamme de longueur d'onde comprise entre 0,5 µm et 12 µm. Ces méthodes de détection optique, même appliquées aux fragments de matières plastiques, sont bien connues de l'homme du métier et ne seront pas décrites ici en plus grand détail.

Propriétés mécaniques des objets 3D obtenus par frittage selon l'invention Préférentiellement, un objet 3D obtenus par frittage selon l'invention présente une résistance à la traction la plus faible supérieure ou égale à 40 MPa (mégapascals), préférentiellement supérieure ou égale à 44 MPa.

Dans le cas où l'objet 3D est obtenu par frittage d'une poudre comportant un additif de détection magnétique, l'objet 4D présente préférentiellement une résistance à la traction la plus faible supérieure ou égale à 30 MPa, très préférentiellement supérieure ou égale à 35 MPa.

Préférentiellement, un objet 3D obtenu par frittage selon l'invention présente un module d'élasticité le plus faible supérieur ou égal à 1600 MPa, préférentiellement supérieur ou égal à 1750 MPa.

En particulier, des éprouvettes standardisées d'objets 3D obtenus à partir d'un procédé de frittage selon l'invention ont été testées concernant leur résistance à la traction et leur module d'élasticité, exprimés en mégapascals (MPa) et concemant leur allongement à la rupture, exprimée en pourcentage. L'objet 3D testé est obtenu à partir d'une composition de poudre de frittage A selon l'invention comportant un additif de détection optique est dans laquelle le polyamide est du PA11. La méthode de test mise en œuvre est conforme au standard ISO 527-1:2019 pour la détermination des propriétés en traction.

**[Table 4]**

| | Résistance à la traction [MPa] | Allongement à la rupture [%] | Module d'élasticité [MPa] |
|---|---|---|---|
| Poudre A : Additif optique (orientation xy) | 45,5 | 25 | 1794 |
| Poudre A : Additif optique (orientation xz ) | 44,9 | 40 | 1827 |

Préférentiellement, les objets 3D obtenus par le procédé de l'invention présentent un allongement à la rupture supérieur ou égal à 20 % sur une première orientation et supérieure ou égale à 35 % sur une deuxième orientation, perpendiculaire à la première.

Dans des essais menés selon ISO 527-1:2019, dont les résultats sont présentés dans le tableau 4 ci-dessus, ces allongements à la rupture ont été mesurés à 25 % et 40 %.

On observe en figure 10 et 11 les graphiques correspondants aux résultats des tests présentés ci-dessus pour l'allongement à la rupture. En figure 10 les résultats du test d'allongement en traction selon une orientation xy et en figure 11 les résultats du test d'allongement en traction selon une orientation xz.

## Revendications

1. Composition de poudre pour procédé de fabrication additive par élévation locale de la température d'une poudre à base de polyamide par un rayonnement électromagnétique dans une enceinte chauffée, provoquant la fusion localisée d'une couche d'une épaisseur prédéterminée pour former, après refroidissement, une couche solide de polyamide **caractérisée en ce que** ladite poudre comporte, sur le poids total de la composition :
- entre 60 % et 99 % en poids de polyamide
- entre 0,05 % et 5 % en poids d'un additif de détection optique qui est un pigment, de préférence un pigment bleu et/ou entre 1 % et 40 % en poids d'un additif de détection magnétique, choisi parmi les oxydes comportant un métal de transition ;
- entre 0,1 % et 5 % en poids d'un agent d'écoulement ;
et **en ce que** la poudre présente :
- une distribution granulométrique D₅₀ comprise entre 35 µm et 55 µm ; et
- une distribution granulométrique D₁₀ supérieure à 15 µm et
- une distribution granulométrique D₉₀ inférieure à 100 µm
les valeurs de distribution granulométrique étant déterminées par la méthode d'analyse d'images statiques selon la norme ISO 13322-1 :2014.

2. Composition de poudre selon la revendication 1, qui présente un indice de viscosité interne mesuré selon ISO 307:2019 compris entre 0,9 et 1,4 décilitres par gramme, à 25 °C.

3. Composition de poudre selon la revendication 1 ou 2, qui présente:
une distribution granulométrique D50 comprise entre 35 µm et 55 µm,
une distribution granulométrique D10 comprise entre 15 µm et 25 µm et
une distribution granulométrique D90 comprise entre 80 µm et 100 µm.

4. Composition de poudre selon l'une quelconque des revendications 1 à 3 **caractérisée en ce qu'**elle présente la distribution de circularité suivante, définie selon la norme ISO 9276-6:2008 :
la distribution cumulative f₁₀ est inférieure ou égale à 0,15, de préférence inférieure ou égale à 0,10
la distribution cumulative f₅₀ est inférieure ou égale à 0,6 de préférence inférieure ou égale à 0,55 et
la distribution cumulative f₉₀ est inférieure ou égale à 0,8, de préférence inférieure ou égale à 0,75.

5. Composition de poudre selon l'une quelconque des revendications 1 à 4, dans laquelle l'additif de détection optique est choisi parmi les pigments comprenant une structure spinelle qui renferme un cation d'un métal de transition, les oxydes d'un métal de transition, les sulfures d'un métal de transition.

6. Composition de poudre selon l'une quelconque des revendications 1 à 5, dans laquelle l'additif de détection optique est un pigment bleu, de préférence le bleu de cobalt.

7. Composition de poudre selon l'une quelconque des revendications 1 à 6, dans laquelle l'agent d'écoulement est choisi parmi les silices, les silices précipitées, les fumées de silice, les silices hydratées, les silices vitreuses, les silices pyrogénées, les phosphates vitreux et les oxydes vitreux.

8. Composition de poudre **caractérisée en ce qu'**elle comporte une fraction massique comprise entre 20 % et 70 % de composition de poudre polyamide fraîche selon l'une quelconque des revendications 1 à 7, et en outre une fraction massique comprise entre 80 % et 30 % de poudre polyamide récupérée à l'issue d'une fabrication additive par élévation locale de la température d'une poudre à base de polyamide par un rayonnement électromagnétique dans une enceinte chauffée.

9. Méthode de fabrication de la composition de poudre selon l'une quelconque des revendications 1 à 8 qui comporte une étape de mélange à sec d'une poudre de polyamide dite « naturelle », comportant entre 95 % et 100 %, et de préférence au moins 99 % en poids, de polyamide, avec une composition de poudre de polyamide comportant un additif de détection optique.

10. Méthode de fabrication selon la revendication 9 dans laquelle la composition de poudre de polyamide comportant un additif de détection optique a été obtenue par réduction en poudre d'une masse liquide ou solide homogène comportant le polyamide et ledit additif optique.

11. Composition de poudre selon l'une quelconque des revendications 1 à 8, obtenue selon la méthode selon la revendication 9 ou 10.

12. Procédé de fabrication d'un objet tridimensionnel, comportant une élévation locale de la température d'une poudre à base de polyamide par un rayonnement électromagnétique dans une enceinte chauffée, provoquant la fusion localisée d'une couche d'une épaisseur prédéterminée pour former, après refroidissement, une couche solide de polyamide, ledit procédé étant **caractérisée en ce que** ladite poudre est une composition de poudre selon l'une quelconque des revendications 1 à 8 et 11.

13. Objet tridimensionnel obtenu par fabrication additive à partir d'une composition selon l'une des revendications 1 à 8 et 11.

14. Objet tridimensionnel selon la revendication 13 **caractérisé en ce qu'**il est coloré, de préférence en bleu dans la masse par un additif de détection optique.

15. Utilisation d'un objet tridimensionnel selon l'une des revendications 13 ou 14 dans une chaîne de production alimentaire.
